# EUROPÄISCHE PATENTANMELDUNG

(11) **EP 2 671 739 A2**
(43) Veröffentlichungstag der Anmeldung: **11.12.2013**
(21) Anmeldenummer: 13002736.0
(22) Anmeldetag: 27.05.2013
(51) Int. Cl.: B60D 1/54, B60D 1/24

(54) **Betätigungssystem für eine Anhängekupplung eines Kraftfahrzeugs**

(30) Priorität: 04.06.2012 DE 102012011070
(71) Anmelder: WESTFALIA - Automotive GmbH, 33378 Rheda-Wiedenbrück (DE)
(72) Erfinder: Söffge, Friedhelm, D-71229 Leonberg (DE)
(74) Vertreter: Bregenzer, Michael

(57) **Zusammenfassung**

Ein Betätigungssystem (11) ist für eine Anhängekupplung eines Kraftfahrzeugs ausgestaltet, die einen an einem Kugelhalslagerkopf (3) gehaltenen Kugelhals (5) aufweist, welcher Kugelhalslagerkopf (3) mit einem Verriegelungsmechanismus (8) für den Kugelhals in einer Betriebsstellung und einer Ruhestellung festlegbar ist, wobei der Verriegelungsmechanismus einen axialbeweglichen in dem Kugelhalslagerkopf gelagerten Sperrbolzen zum Ein- und Ausrücken des Verriegelungsmechanismus umfasst.

Zur Optimierung der Anhängekupplung verfügt das Betätigungssystems neben dem Verriegelungsmechanismus des Kugelhalslagerkopfs über einen Schwenkmechanismus (13) für die aus Kugelhals und Kugelhalslagerkopf bestehende Baueinheit (14), wobei zwischen dem Verriegelungsmechanismus und dem Schwenkmechanismus ein eine Ablaufsteuerung bewirkendes Getriebesystem (15) vorgesehen ist, das von einem Elektromotor (16) in der Weise beeinflusst wird, dass zunächst der Verriegelungsmechanismus und danach der Schwenkmechanismus aktiviert wird.

## Beschreibung

Die Erfindung bezieht sich auf ein Betätigungssystem für eine Anhängekupplung eines Kraftfahrzeugs, die einen an einem Kugelhalslagerkopf gehaltenen Kugelhals aufweist, nach dem Oberbegriff des Patentanspruchs 1.

Es ist eine Anhängekupplung bekannt, EP 1 886 847 B1, die einen zwischen einer Arbeitsstellung und einer Ruhestellung bewegbaren Kugelhals umfasst. Der Kugelhals wirkt mit einer fahrzeugfest angeordneten Schwenklagereinheit zusammen, in der ein Schwenklagerkörper durch eine Schwenkbewegung um eine Schwenkachse zwischen Arbeitsstellung und der Ruhestellung verschwenkbar aufgenommen ist. Außerdem ist die Schwenklagereinheit mit einer durch einen Antrieb bewegbaren Drehblockiereinrichtung versehen. Der Antrieb für die Drehblockiereinrichtung und ein Antrieb für die Schwenkbewegung des Schwenklagerkörpers sind durch ein Planetengetriebe gekoppelt.

Eine Anhängekupplung für ein Kraftfahrzeug, DE 103 20 302 A1, umfasst eine Kugelstange. Die Kugelstange ist einerseits mit einem Kugelstangenlagerkopf fest verbunden und an einem freien Endbereich mit einer Kupplungskugel versehen. Der Kugelstangenlagerkopf ist an einem Aufbau des Kraftfahrzeugs gehalten, wobei über einen drehbaren Lagerkopfbereich des Kugelstangenlagerkopfs die Kugelstange zwischen einer Betriebslage und einer Ruhelage verstellbar ist. Innerhalb des Kugelstangenlagerkopfs ist eine Verriegelung mit einem Sperrbolzen wirksam, der mit einem Handrad-Auslösemechanismus aus einer Verriegelungsstellung in eine Entriegelungsstellung verbringbar ist.

In der DE 20 2006 011 346 U1 wird eine Anhängevorrichtung für Kraftfahrzeuge offenbart, die einen Kugelhals besitzt. Letzterer ist um mindestens zwei translatorische Achsen beweglich und an einem Gestell der Anhängevorrichtung gelagert. Diese Anhängevorrichtung verfügt über einen mechanischen Antrieb zur Bewegung des Kugelhalses zwischen einer Betriebsstellung und einer Ruhestellung. Der Antrieb besteht aus einem Antriebsmotor, der ein Elektromotor -Getriebemotor- sein kann. Und dieser Antrieb weist eine Einrichtung zur Erzeugung einer zumindest bereichsweise überlagerten Rotationsbewegung des Kugelhalses um die beiden Achsen auf. In der Anhängevorrichtung ist eine Verriegelung des Kugelhalses in beiden Endstellungen vorgesehen.

Aufgabe der Erfindung ist es, für eine Anhängekupplung eines Kraftfahrzeugs ein Betätigungssystem zu konzipieren, das sich bezüglich Entriegeln und Verriegeln eines mit einem Kugelhalslagerkopf verbundenen Kugelhals durch eine funktionsgerechte und leicht umsetzbare Konstruktion auszeichnet. Dabei sollte aber auch sichergestellt sein, dass das Betätigungssystem bauraumgünstig und mit vertretbaren Maßnahmen in das Kraftfahrzeug integrierbar ist.

Erfindungsgemäß wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass das Betätigungssystem der Anhängekupplung vorbildlich gestaltet ist, weil es dank des ausgeklügelten Getriebesystems mit einem einzigen Elektromotor sowohl den Verriegelungsmechanismus wie auch den Schwenkmechanismus antreibt, und zwar mit einer sinnreichen Ablaufsteuerung. Dabei verfügt das Getriebesystem über die mit dem Elektromotor zusammenarbeitende hochwirksame Antriebswelle, mit der die Hohlwelle gedreht wird. Die Hohlwelle wird von der axialbeweglichen die Steuerbahn aufweisende Steuerhülse umgeben, die mittels des Steuerhebels den Sperrbolzen des Verriegelungsmechanismus in axialer Richtung betätigt. Hierbei ist hervorzuheben, dass die Hohlwelle das Steuerglied in Gestalt der Rolle trägt, mit der die Steuerbahn ausgezeichnet zusammenarbeitet, wobei die Steuerhülse am Umfang von dem Hüllkörper Beispiel gebend umschlossen wird.

Der Kugelhals ist am und/oder im Kugelhalslagerkopf schwenkbar und/oder verschieblich gelagert. Mithin ist also auch eine Axial-Verschiebung zusätzlich zu einer Schwenkbewegung des Kugelhalses relativ zum fahrzeugfest festgelegten oder festlegbaren Kugelhalslagerkopf möglich. Der Kugelhals kann auch bezüglich des Kugelhalslagerkopfs ausschließlich schwenkbar oder verschieblich sein.

Der Kugelhalslagerkopf kann zweiteilig sein und eine fahrzeugfest am Kraftfahrzeug befestigte oder befestigbare erste Lagerkomponente und eine zweite, mit dem Kugelhals verbundene, beispielsweise mit diesem einstückige, Lagerkomponente umfassen.

Es ist aber auch möglich, dass der Kugelhalslagerkopf den Kugelhals unmittelbar lagert.

Der Kugelhalslagerkopf kann eine einteilige Baueinheit darstellen oder auch mehrteilig sein.

Der Kugelhalslagerkopf kann eine Aufnahme, in die der Kugelhals mit einem entsprechenden Lagerzapfen eingreift und/oder einen insbesondere als Lagerzapfen ausgestalteten Lagervorsprung aufweisen, auf dem der Kugelhalslagerkopf gelagert ist.

An dieser Stelle sei erwähnt, dass der Kugelhals selbstverständlich auch andere Kuppelelemente zum Ankuppeln eines Anhängers oder eines Lastenträgers tragen kann als eine Kugel, beispielsweise eine Steckaufnahme haben kann oder dergleichen.

Der Sperrbolzen ist zweckmäßigerweise in seine Verriegelungsstellung oder seine Entriegelungsstellung durch eine Federanordnung federbelastet.

Der Sperrbolzen kann Sperrmittel integral umfassen, beispielsweise in eine Sperr-Aufnahme eingreifen. Bevorzugt ist es, wenn der Sperrbolzen auf eines oder mehrere Formschlusselemente, zum Beispiel Kugeln, Bolzen oder dergleichen einwirkt, die mit korrespondierenden Formschlusskonturen, zum Beispiel einer Rinne, einer Kugelkalotte oder dergleichen, zusammenwirken. Zweckmäßig ist es z.B., dass der Sperrbolzen das oder die Formschlusselemente beispielsweise in eine jeweilige Formschlussaufnahme hinein verstellt.

Der Kugelhals ist beispielsweise zwischen einer Betriebsstellung, die zum Ziehen eines Anhängers vorgesehen ist, und einer Ruhestellung an dem Kugelhalslagerkopf beweglich gelagert, in der der Kugelhals beispielsweise näher beim Heck des Kraftfahrzeugs angeordnet ist, zum Beispiel in einem Ruhestellungsraum zwischen Stoßfänger und Karosserie im Wesentlichen verborgen ist.

Musterhaft ist, dass der Steuerhebel den Umfang des Hüllkörpers mit den Lagerarmen der Traggabel umgreift und die freien Enden der Lagerarme des Steuerhebels am Hüllkörper schwenkbar angebracht sind. Unterstützt wird letzteres dadurch, dass der Steuerhebel als zweiarmiger Hebel ausgeführt ist, der mit einer koaxialen Verlängerung des Sperrbolzens in Wirkverbindung steht. Vorteilhaft in diesem Zusammenhang ist, dass die Antriebswelle des Getriebesystems mit einem Schneckenrad versehen ist, welches Schneckenrad mit dem als Schneckenwelle ausgebildeten Abtriebszapfen des Elektromotors kooperiert. Und der Abtriebszapfen des Elektromotors und die Antriebswelle des Getriebesystems schließen bspw. einen rechten Winkel ein.

Das Konzept des Getriebesystems setzt Maßstäbe, weil die Antriebswelle auf einem von der Hohlwelle abgekehrten Endbereich mit einem Gewindezapfen in eine Gewindebohrung eines Steuerzapfens des Schwenkmechanismus eingebracht ist, und zwar in der Weise, dass der Gewindezapfen und die Gewindebohrung drehfest miteinander verbunden sind. Bemerkenswert geschickt unterstützt wird dies dadurch, dass der Steuerzapfen einen Lagermantel besitzt, der in der Lagerbohrung der Betätigungshülse rotiert, wobei diese Betätigungshülse mit dem Lagerabschnitt in dem Lagerelement drehbar angeordnet ist. Eine Konstruktion, die die Kugelhalslagerkopf-Technik für Anhängekupplungen bzw. deren Schwenkmechanismus bereichert, wird erzielt, wenn die Betätigungshülse das mit Abstand zum Lagerabschnitt angeordnete erste Zahnrad aufweist, das mit dem zweiten Zahnrad des Kugelhalskopfs kämmt. Dabei ist Beispiel gebend, dass das zweite Zahnrad in den im Querschnitt trogartigen Zylinderkörper mit kreisförmigem Umfang des Kugelhalslagerkopfs integriert ist, welche Kappe aus hochfestem Kunststoff, Verbundwerkstoff oder dgl. besteht. Schließlich ist die Ablaufsteuerung zwischen Verriegelungsmechanismus und dem Schwenkmechanismus dadurch leicht realisierbar, dass der Steuerzapfen beabstandet zum Gewindezapfen eine Zapfenverlängerung aufweist, die zusammen mit dem Bohrungsabschnitt der Betätigungshülse einen Freilauf bilden. Und der Freilauf weist wirkungsvereinfachend zum einen das Anschlagelement des Steuerzapfens und zum anderen an den Enden der ringförmigen Ausnehmung die etwa um 180° versetzten Stützabschnitte auf.

In der Zeichnung wird ein Ausführungsbeispiel der Erfindung gezeigt, das nachstehend näher erläutert wird.

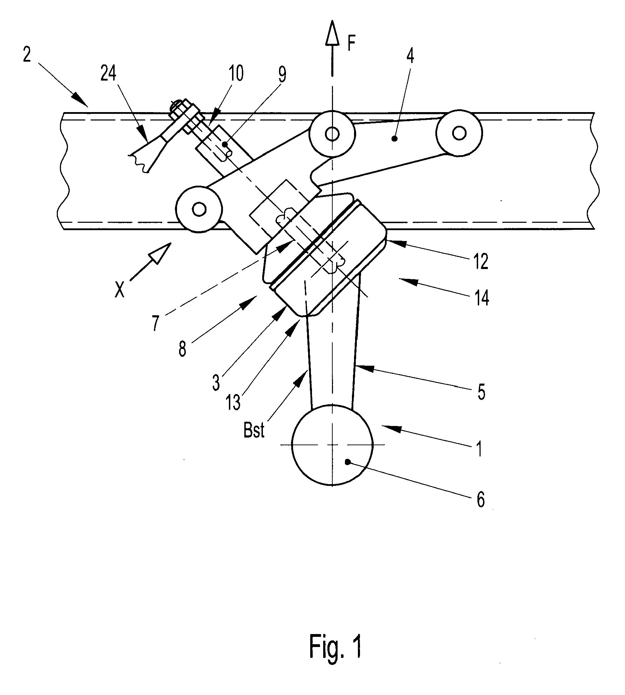

Es zeigen
- Fig. 1: eine schematische Ansicht von oben auf eine Anhängekupplung für ein Kraftfahrzeug mit einem Querträger, an dem ein Kugelhalslagerkopf mit einem Kugelhals in Lage gehalten wird,
- Fig. 2: eine Einzelheit X der Fig. 1 teilweise im Schnitt und in größerem Maßstab,
- Fig. 3: eine Ansicht etwa in Pfeilrichtung Y der Fig. 1 in größerem Maßstab,
- Fig. 4: einen Schnitt nach der Linie IV-IV der Fig. 2.

Eine Anhängekupplung 1 für ein nicht näher dargestelltes Kraftfahrzeug, dessen Fahrtrichtung mit F angegeben ist, ist z.B. in einem Heck dieses Kraftfahrzeugs befestigt und weist einen Querträger 2 auf, an dem ein Kugelhalslagerkopf 3 unter Vermittlung einer Lagerkonsole 4 gehalten wird. Der Kugelhalslagerkopf 3 trägt einen Kugelhals 5, der an einem freien Ende mit einer Kupplungskugel 6 versehen ist. In den Kugelhalslagerkopf 3 eingebaut ist ein axial beweglicher Sperrbolzen 7 eines Verriegelungsmechanismus 8. Nach mechanischer Beeinflussung bzw. Ausrücken des Verriegelungsmechanismus 8 ist der Kugelhals 5 von einer Betriebsstellung Bst in eine Ruhestellung -nicht gezeigt- bewegbar. Einzelheiten des Sperrbolzens 7 sind in der bereits eingangs zitierten DE 103 20 302 A1 dargestellt. Der Sperrbolzen 7 ist mit einer koaxialen Verlängerung 9 verbunden, die als Schubstange 10 des Sperrbolzens 7 dient.

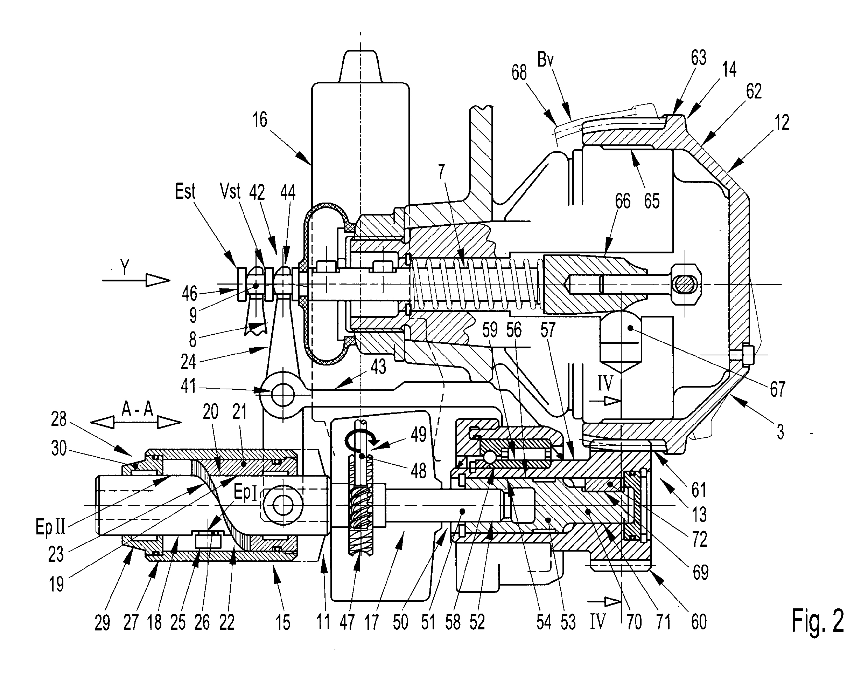

Ein Betätigungssystem 11 -Fig. 2- für die Anhängekupplung 1 bzw. den Kugelhals 5 und den beweglichen Teil 12 des Kugelhalslagerkopfs 3 wirkt mit dem Verriegelungsmechanismus 8 zusammen, und zwar zum Ein- und Ausrücken des Sperrbolzens 7. Neben dem Verriegelungsmechanismus 8 verfügt das Betätigungssystem 11 auch noch über einen Schwenkmechanismus 13 für die aus Kugelhals 5 und Kugelhalslagerkopf 3 bestehende Baueinheit 14. Zwischen dem Verriegelungsmechanismus 8 und dem Schwenkmechanismus 13 ist ein Getriebesystem 15 wirksam. Das eine Ablaufsteuerung bewirkende Getriebesystem 15 wird von einem Elektromotor 16 beeinflusst, dergestalt, dass zunächst der Verriegelungsmechanismus 8 und nach dessen Ausrücken oder Entriegeln der Schwenkmechanismus 13 aktiviert wird.

Das Getriebesystem 15 besitzt eine mit dem Elektromotor 16 zusammenwirkende Antriebswelle 17, die eine Hohlwelle 18 in Drehbewegung versetzt. Hierzu ist die Hohlwelle 18 über ein Außengewinde 19 mit einem Innengewinde 20 einer Steuerhülse 21 verbunden. Der Außendurchmesser der Hohlwelle 18 wird unmittelbar von der lediglich axial beweglichen -in Richtung A-A- Steuerhülse 21 umgeben, die an einer von der Antriebswelle 17 abgekehrten Stirnseite 22 eine Steuerbahn 23 aufweist. Durch ihre Axialbewegung A-A beeinflusst die Steuerhülse 21 unter Zwischenschaltung eines Steuerhebels 24 den Sperrbolzen 7 des Verriegelungsmechanismus 8. Am Umfang der Hohlwelle 18 ist ein Steuerglied 25 befestigt, das im Ausführungsbeispiel als rotierbar gelagerte Rolle 26 ausgeführt ist und mit der Steuerbahn 23 in Wirkverbindung steht.

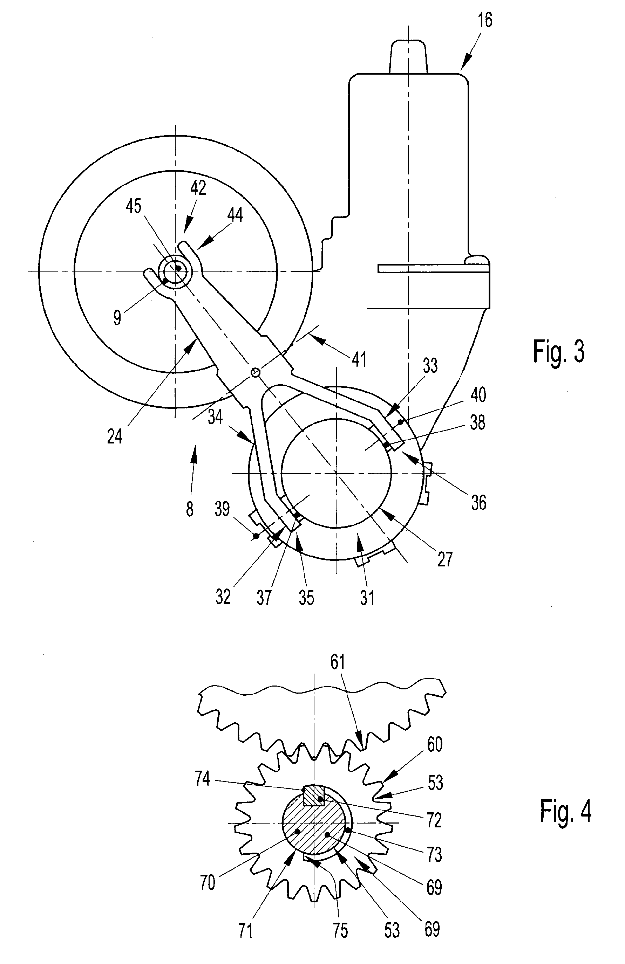

Die Steuerhülse 21 wird von einem im Querschnitt rohrförmigen Hüllkörper 27 umgeben, der -in axialer Richtung betrachtetabschnittsweise die Steuerhülse 21 fest umgibt. An einem von der Steuerhülse 21 entfernt liegenden Endbereich 28 ist der Hüllkörper 27 mit einem Kragen 29 versehen, der als Lager 30 für die drehende Hohlwelle 18 dient. Der Steuerhebel 24 umgreift den äußeren Umfang 31 des Hüllkörpers 27 mit Lagerarmen 32 und 33 einer Traggabel 34 -Fig. 3-. Freie Enden 35 und 36 der Lagerarme 32 und 33 sind an Lagerstützen 37 und 38 des Hüllkörpers 27 herangeführt und mittels Lagergliedern 39 und 40 mit letzterem verbunden. Aus den Fig. 2 und 3 ist ersichtlich, dass der Steuerhebel 24 prinzipiell als zweiarmiger Hebel ausgeführt ist und über eine Schwenkachse 41 winkelbeweglich ist. Auf einem den Lagergliedern 39 und 40 abgekehrten Endbereich 42 ist der Steuerhebel 24 mit der Verlängerung 9 des Sperrbolzens 7 des Verriegelungsmechanismus 8 verbunden, wobei die Schwenkachse 41 an einer fahrzeugfesten Konsole 43 gehalten wird. Eine Verbindungsgabel 44 umgreift einen kreisförmigen Querschnitt 45 der Verlängerung 9, die mit einem radialen Begrenzungselement 46 für die die Verbindungsgabel 44 in axialer Richtung lagebestimmend ist. Über den Steuerhebel ist die Verlängerung 9 des Sperrbolzens 7 zwischen einer Verriegelungsstellung Vst und einer Entriegelungsstellung Est bewegbar -Fig.2-.

Die Antriebswelle 17 des Getriebesystems 15 ist mit einem Schneckenrad 47 versehen, das mit einem als Schneckenwelle 48 ausgebildeten Abtriebszapfen 49 des Elektromotors 16 in Wirkverbindung steht. Bei dieser Ausführungsform schließen der Abtriebszapfen 49 des Elektromotors 16 und die Antriebswelle 17 des Getriebesystems 15 einen rechten Winkel ein. Die Antriebswelle 17 ist an einem von der Hohlwelle 18 abgekehrten Endbereich 50 mit einem Gewindezapfen 51 in eine Gewindebohrung 52 eines Steuerzapfens 53 des Schwenkmechanismus 13 eingebracht, und zwar in der Weise, dass der Gewindezapfen 51 und die Gewindebohrung 52 des Steuerzapfen 53 drehfest miteinander verbunden sind. Der Steuerzapfen 53 besitzt einen Lagermantel 54, der in einer Lagerbohrung 56 einer Betätigungshülse 57 rotierbar ist. Darüber hinaus ist die Betätigungshülse 57 mit einem Lagerabschnitt 58 in einem Lagerelement 59 drehbar angeordnet.

Die Betätigungshülse 57 weist ein mit axialem Abstand zum Lagerabschnitt 58 angebrachtes erstes Zahnrad 60 auf, das mit einem zweiten Zahnrad 61 des Kugelhalslagerkopfs 3 kämmt. Das zweite Zahnrad 61 ist in einen im Querschnitt trogartig ausgebildeten, aus Kunststoff, Verbundwerkstoff oder dgl. bestehenden Zylinderkörper 62 mit kreisförmigem Umfang 63 des Kugelhalslagerkopfs 3 integriert. Dabei übergreift der Zylinderkörper 62 einen zylinderischen Lagerkörper 65, in dem ein axialer Sperrdorn 66 des Sperrbolzens 7 und Sperrmittel 67 gelagert sind, welcher Sperrdorn 66 bspw. ein Sperrmittel 67 beeinflusst. Der Kugelhalslagerkopf 3 führt bei Bewegungen zwischen Betriebsstellung Bst und Ruhestellung Winkelbewegungen aus. Hierzu ist eine Verzahnung 68 des zweiten Zahnrads 61 ballig und oder als Bogenverzahnung Bv ausgeführt, siehe z.B. Fig. 2.

Zur Ablaufsteuerung des Verriegelungsmechanismus 8 und des Schwenkmechanismus 13 dient ein Freilauf 69. Dazu weist der Steuerzapfen 53 axial beabstandet zum Gewindezapfen 51 eine Zapfenverlängerung 70 auf, die zusammen mit einem Bohrungsabschnitt 71 der Betätigungshülse 57 besagten Freilauf 69 bilden. Letzterer umfasst zum einen ein Anschlagelement 72 des Steuerzapfens 53 und zum anderen an Enden einer kreisringförmigen Ausnehmung 73 der Betätigungshülse 57 etwa um 180° versetzte Stützabschnitte 74 und 75.

Wird der Elektromotor 16 aktiviert, so wird die Hohlwelle 18 gedreht, wodurch das Steuerglied 25 bzw. die Rolle 26 von einer ersten Endposition EpI in ein zweite Endposition EpII bewegt wird -Fig. 2-. Die Drehbewegung der Hohlwelle 18 bewirkt eine Axialbewegung der Steuerhülse 21 und eine Schwenkbewegung des Steuerhebels 24. Gleichzeitig rotiert das Anschlagelement 72 vom Stützabschnitt 74 zum Stützabschnitt 75 des Freilaufs 69. Nachdem das Anschlagelement 72 den Stützabschnitt 75 erreicht hat wirken das erste Zahnrad 60 und das zweite Zahnrad 61 zusammen und verschwenken den Kugelhalslagerkopf 3 bzw. den Kugelhals 5 in vorbestimmter Weise.

## Patentansprüche

1. Betätigungssystem für eine Anhängekupplung eines Kraftfahrzeugs, die einen an einem Kugelhalslagerkopf insbesondere drehbar und/oder verschieblich gehaltenen Kugelhals aufweist, welcher Kugelhalslagerkopf mit einem Verriegelungsmechanismus für den Kugelhals in einer Betriebsstellung und/oder einer Ruhestellung festlegbar ist, wobei der Verriegelungsmechanismus einen axialbeweglichen in dem Kugelhalslagerkopf gelagerten Sperrbolzen zum Ein- und Ausrücken des Verriegelungsmechanismus umfasst, **dadurch gekennzeichnet, dass** das Betätigungssystem (11) neben dem Verriegelungsmechanismus (8) des Kugelhalslagerkopfs (3) über einen Schwenkmechanismus (13) für die aus Kugelhals (5) und Kugelhalslagerkopf (3) bestehende Baueinheit (14) verfügt, wobei zwischen dem Verriegelungsmechanismus (8) und dem Schwenkmechanismus (13) ein eine Ablaufsteuerung bewirkendes Getriebesystem (15) vorgesehen ist, das von einem Elektromotor (16) in der Weise beeinflusst wird, dass zunächst der Verriegelungsmechanismus (8) und danach der Schwenkmechanismus (13) aktiviert wird.

2. Betätigungssystem nach Anspruch 1, **dadurch gekennzeichnet, dass** das Getriebesystem (15) eine mit dem Elektromotor (16) zusammenwirkende Antriebswelle (17) besitzt, die eine Hohlwelle (18) dreht, welche Hohlwelle (18) von einer axial beweglichen und an einer Stirnseite (22) eine radial verlaufende Steuerbahn (23) aufweisenden Steuerhülse (21) umgeben wird, die unter Zwischenschaltung eines Steuerhebels (24) den Sperrbolzen (7) des Verriegelungsmechanismus (8) beeinflusst, wobei vorteilhaft vorgesehen ist, dass am Umfang der Hohlwelle (18) ein Steuerglied (25) z.B. in Form einer Rolle (26) angebracht ist, die in Wirkverbindung mit der Steuerbahn (23) steht.

3. Betätigungssystem nach Anspruch 2, **dadurch gekennzeichnet, dass** die Steuerhülse (21) von einem im Querschnitt rohrförmigen Hüllkörper (27) umgeben ist, der einerseits die Steuerhülse (21) umschließt und andererseits mit einem Kragen (29) die Hohlwelle(18) lagert.

4. Betätigungssystem nach Anspruch 3, **dadurch gekennzeichnet, dass** ein Steuerhebel (24) den Umfang des Hüllkörpers (27) mit Lagerarmen (32 und 33) einer Traggabel (34) umgreift, wobei freie Enden (35 und 36) der Lagerarme (32 und 33) des Steuerhebels (24) unter Zwischenschaltung von Lagergliedern (39 und 40) mit dem Hüllkörper (27) verbunden sind.

5. Betätigungssystem nach Anspruch 4, **dadurch gekennzeichnet, dass** der Steuerhebel (24) als zweiarmiger Hebel ausgeführt ist, der auf dem den Lagergliedern (39 und 40) abgekehrten Endbereich (42) mit einer koaxialen Verlängerung (9) des Sperrbolzens (7) zusammenarbeitet.

6. Betätigungssystem nach einem der Ansprüche 2 bis 5, **dadurch gekennzeichnet, dass** die Antriebswelle (17) des Getriebesystems (15) mit einem Schneckenrad (47) versehen ist, das mit einem als Schneckenwelle (48) ausgebildeten Abtriebszapfen (49) des Elektromotors (16) in Wirkverbindung steht, wobei der Abtriebszapfen (49) und die Antriebswelle (17) bspw. einen rechten Winkel einschließen.

7. Betätigungssystem nach einem der Ansprüche 2 bis 6, **dadurch gekennzeichnet, dass** die Antriebswelle (17) des Getriebesystems (15) auf einem von der Hohlwelle (18) abgekehrtem Endbereich (50) mit einem Gewindezapfen (51) in eine Gewindebohrung (52) eines Steuerzapfens (53) des Schwenkmechanismus (13) eingebracht ist, dergestalt, dass der Gewindezapfen (51) und die Gewindebohrung (52) des Steuerzapfens (53) drehfest miteinander verbunden sind.

8. Betätigungssystem nach Anspruch 7, **dadurch gekennzeichnet, dass** der Steuerzapfen (53) einen Lagermantel (54) besitzt, der in einer Lagerbohrung (56) einer Betätigungshülse (57) rotierbar ist, wobei die Betätigungshülse (57) zweckmäßigerweise mit einem Lagerabschnitt (58) in einem Lagerelement (59) drehbar angeordnet ist.

9. Betätigungssystem nach Anspruch 8 oder 9, **dadurch gekennzeichnet, dass** die Betätigungshülse (57) ein mit Abstand zum Lagerabschnitt (58) angeordnetes erstes Zahnrad (60) aufweist, das mit einem zweiten Zahnrad (61) des Kugelhalslagerkopfs (3) kämmt, wobei das zweite Zahnrad (61) vorteilhaft in einen im Querschnitt trogartigen Zylinderkörper (62) mit kreisförmigem Umfang (63) des Kugelhalslagerkopfs (3) integriert ist.

10. Betätigungssystem nach Anspruch 9, **dadurch gekennzeichnet**, das der Zylinderkörper (62) aus z.B. aus hochfestem Kunststoff, Verbundwerkstoff oder dgl. besteht.

11. Betätigungssystem nach einem der Ansprüche 7 bis 10, **dadurch gekennzeichnet, dass** der Steuerzapfen (53) beabstandet zum Gewindezapfen (51) eine Zapfenverlängerung (70) aufweist, die zusammen mit einem Bohrungsabschnitt (71) der Betätigungshülse (57) einen Freilauf (69) bilden.

12. Betätigungssystem nach Anspruch 11, **dadurch gekennzeichnet, dass** der Freilauf (69) zum einen ein Anschlagelement (72) des Steuerzapfens (53) und zum anderen an Enden einer ringförmigen Ausnehmung (73) etwa um 180° versetzte Stützabschnitte (74 und 75) aufweist.

13. Anhängekupplung mit einem Betätigungssystem nach einem der vorhergehenden Ansprüche, wobei die Anhängekupplung einen an einem Kugelhalslagerkopf schwenkbar und/oder verschieblich gehaltenen Kugelhals aufweist, der in zumindest einer Stellung, insbesondere der zum Ziehen eines Anhängers geeigneten Betriebsstellung, anhand eines Verriegelungsmechanismus verriegelbar ist, wobei der Verriegelungsmechanismus anhand des Betätigungssystems verriegelbar und/oder entriegelbar ist.

14. Anhängekupplung nach Anspruch 11, **dadurch gekennzeichnet, dass** der Kugelhals gegenüber dem fahrzeugseitig festlegbaren oder festgelegten Kugelhalslagerkopf oder eine bewegliche Lagerkomponente des Kugelhalslagerkopfs gegenüber einer fahrzeugseitig festlegbaren oder festgelegten Lagerkomponente des Kugelhalslagerkopfs schwenkbar und vorzugsweise verschieblich ist.

15. Anhängekupplung nach Anspruch 13 oder 14, **dadurch gekennzeichnet, dass** ein freier Endbereich des Sperrbolzens (7) vor eine Lagereinheit, insbesondere den Kugelshalslagerkopf (3) der Anhängekupplung, zur Koppelung mit dem Betätigungssystem vorsteht.
